# EUROPEAN PATENT SPECIFICATION

(11) **EP 2 196 067 B1**
(45) Date of publication and mention of the grant of the patent: **07.05.2014**
(21) Application number: 08795480.6
(22) Date of filing: 21.08.2008
(51) Int. Cl.: H05B 3/68, A47J 37/06

(54) **THIN FILM COOKING AND FOOD TRANSFER DEVICES AND METHODS**
DÜNNFILMKOCH- UND NAHRUNGSMITTELTRANSFEREINRICHTUNGEN UND VERFAHREN
DISPOSITIFS ET PROCÉDÉS DE CUISSON SUR FILM MINCE ET DE TRANSFERT D'ALIMENTS

(30) Priority: 24.08.2007 US 895391
(43) Date of publication of application: 16.06.2010
(60) Divisional application: 14154887.5
(73) Proprietor: Restaurant Technology, Inc., Oak Brook, IL 60523 (US)
(72) Inventor: CALZADA, Manuel, Oak Brook, IL 60523 (US); FEINBERG, Bruce, G., Oak Brook, IL 60523 (US); KELLENBERGER, Daryl, Oak Brook, IL 60523 (US); SUS, Gerald, A., Romeoville, IL 60446 (US)
(74) Representative: Clark, Jane Anne
(86) International application number: PCT/US2008/009939
(87) International publication number: WO 2009/029196

(56) References cited:
- US-A- 5 141 800
- US-A- 5 141 800
- US-A- 6 109 169
- US-A- 6 109 169
- US-A1- 2007 190 336
- US-A1- 2007 190 336

## Description

### FIELD OF THE INVENTION

The present invention relates to cooking devices and to methods of cooking food items on a grill, griddle or other flat surface. More particularly, the invention relates to devices and methods of cooking food on a flat surface and removing the food therefrom in which removable, disposable, flexible, non-stick sheets are utilized.

### BACKGROUND OF THE INVENTION

A need exists for improved devices and methods for cooking relatively large quantities of food, particularly food such as hamburger patties in quick service restaurants.

Typically, clamshell grills are utilized that have top and bottom (upper and lower) heated cooking platens. The food items to be cooked, typically a plurality of items, such as, for example, 6, 9, 12 or more hamburger patties, are placed on the lower platen. The upper platen is closed onto and in contact with the food items on the lower platen so that both sides of the food items are cooked simultaneously. When cooking is completed, the upper platen is raised and the food items are manually removed from the lower platen, such as with a flat metal spatula.

A need exists to remove all of the food items on the lower platen as quickly as possible and preferably all at once to help facilitate production of uniform cooked food products.

To prevent food items from unwanted adherence to the upper platen, especially when the upper platen is opened when cooking is completed, a PTFE impregnated fiberglass release sheet is mechanically attached to the upper platen. Otherwise, removal of the items is hampered and food item breakage can occur due to sticking, for example.

Other problems have been linked to food items adhering to the lower platen, including fissures in hamburger patties, for example, commonly referred to as "blow holes." While not wishing to be bound by theory, it is believed that shrinkage of a hamburger patty during cooking, together with adherence to the lower platen surface, results in crack and fissure formation in the meat. Expansion of hot gases trapped between the patty and the lower platen then likely causes these cracks to propagate upward, harming the appearance and integrity of the patty. This problem is exacerbated in high volume cooking, where the time required to remove a full run of patties from a lower platen can result in overcooking of the last patties removed.

However, the conventional upper platen type of release sheets do not work well on the lower platen. Good sear (good carmelization and browning) on the lower surface of the food items, such as hamburger patties, are prevented when such release sheets are used, making them unacceptable.

A need therefore exists for a lower horizontal heated platen cooking device that prevents sticking of food items while providing good sear, that is, good carmelization and good browning of food items cooked thereon, such as hamburger patties and other food items. A need also exists for such a device that would also achieve faster removal of cooked food items from the heated lower platen upon completion of cooking.

US 2007/0190336 describes a dense PTFE article in the form of a surface for a food preparation device, the surface being fabricated from a sheet of PTFE with a thermal resistance of 1.3°C. in²/W (8.39 x 10⁻² °C .m²/W) or less.

US 6 109 169 describes a grilling appliance which includes a housing having a vertical food compartment for receiving a food article in a vertical position, a heated first grill plate mounted in a vertical position in one side of the food compartment, a heated second grill plate mounted in a vertical position in the opposite side of the compartment, and a non-electrical drive for driving the second grill plate to an extended position towards the first grill plate, or to a retracted position away from the first grill plate.

### BRIEF SUMMARY OF THE INVENTION

In accordance with one aspect of the invention, a cooking device is provided that permits efficient cooking of one or more food items. In one aspect, the cooking device comprises a food-supporting cooking platen for supporting food items to be cooked and at least one flexible non-stick release sheet removably laid on top of the food-supporting platen, wherein the release sheet comprises a fiberglass substrate layer having a thin film PTFE layer on each side of the fiberglass substrate. The release sheet has sufficient stiffness to permit removal of food products from the release sheet with a spatula when the release sheet is laid over the food-supporting platen. In addition, when the release sheet is in contact with the platen, an overall heat transfer coefficient from the surface of the food-supporting platen to the food contacting surface of the release sheet is sufficient to achieve good sear on hamburger patties using a food-supporting platen temperature in the range of from about 350-450°F (117 to 232°C) and more desirably 375-425°F (190 to 218°C). Typically, such heat transfer coefficients will be at least about 210 BTU/hr-ft²-°F (1,192 W/K-m²).

Typically, the release sheet will be configured and utilized so that it substantially covers the top surface (the cooking surface) of the food-supporting platen.

Typically, the thickness of the release sheet will be in the range of from about 0.001 inch (2.54 x 10⁻⁵ m) to about 0.003 inch (7.62 x 10⁻⁵ m) and may have a thickness of about 0.002 inch (5.08 x 10⁻⁵ m). Typically, the release sheet will be at least substantially liquid-impermeable. This is because it is desirable that no or substantially no liquid from the food products being cooked on the release sheet penetrate through the release sheet into contact with the food-supporting platen surface. The food-supporting platen surface may be the bottom or lower platen of a clamshell-type grill that permits simultaneous two-sided cooking of food products, which may be hamburger patties.

Typically, the overall heat transfer coefficient when the release sheet is in contact with the food-supporting platen from the surface of the food-supporting platen to the food contacting surface of the release sheet is sufficient to achieve good sear, that is, good carmelization and good browning, on hamburger patties using a food- supporting platen temperature in the range of from about 350-450°F (117 to 232°C) and more desirably 375-425°F (190 to 218°C). Typically, such heat transfer coefficients will be in the range of from about 210 BTU/hr-ft²-°F (1,192 W/K-m²) to about 250, 300, 350 or more BTU/hr-ft²-°F (1,420, 1,703, 1,987 W/K-m²). Such heat transfer coefficients provide efficient cooking and permit good sear to be achieved on the surface of the food items that are in contact with the release sheet.

In accordance with a disclosed example, an adherence- enhancing fluid is located between the food-supporting platen surface and the bottom surface of the release sheet. It is believed that the adherence-enhancing fluid increases the surface tension between the platen and the release sheet to promote adherence. The adherence-enhancing fluid can be selected from various oils, fats and lubricants, that may be animal, vegetable or synthetically derived, including, for example, without limiting the scope of the invention, cooking oil, shortening, animal fat, oil produced by cooking a food item, or glycerin, for example. Preferably, any such adherence- enhancing fluid will be food compatible.

As described herein, commercial methods of efficiently cooking one or a plurality of food items simultaneously are provided. One example includes providing a platen for supporting food items to be cooked and capable of being heated and a lower platen release sheet as defined herein, optionally applying an adherence-promoting material to the platen and/or the release sheet, placing the release sheet in intimate heat transfer contact with the platen, which may be facilitated through an interface formed by the adherence- enhancing material, if present, placing one or more food items to be cooked directly on the release sheet and cooking the food item(s) in direct contact with the release sheet. Typically, the food-supporting platen will have a heating element associated with it that may be, for example, gas-fired or electrically heated, as desired. Typically, the lower or food-supporting platen release sheet will be in intimate contact with the top surface of the lower or food-supporting platen. The release sheet should have sufficient stiffness to permit removal of food products from the release sheet with a spatula, preferably having a dull edge, when the release sheet is laid over the food-supporting platen, and to stay flat. This is accomplished without the necessity of any mechanical attachment of the release sheet to the lower platen. It is merely necessary to lay the release sheet over the food-supporting platen. If desired, an adherence-promoting material which typically will be in the form of a fluid grease or oil can be applied to the surface of the food-supporting platen or to the bottom surface of the release sheet so that the adherence-promoting material creates an interface between the food-supporting platen and the release sheet placed thereover. Advantageously, when the release sheet is in contact with the food-supporting platen an overall heat transfer coefficient from the surface of the food-supporting platen to the food contacting surface of the release sheet is sufficient to achieve good sear on hamburger patties using a food-supporting platen temperature in the range of from about 350-450°F (117 to 232°C) and more desirably 375-425°F (190 to 218°C). Typically, such heat transfer coefficients will be in the range of from about 210 BTU/hr-ft²-°F to about 350 BTU/hr-ft ft²-°F (about 1,192 to about 1,987 W/K-m² or greater. Thus, the heat transfer coefficient may be, for example, 250, 300, 350 (1,420, 1,703, 1,987 W/K-m²) or greater BTU/hr-ft²-°F.

The flexible, removable, non-stick release sheet may cover substantially the entire top surface of the food-supporting platen. One or more of such release sheets may be utilized to cover substantially the entire cooking surface area of the food-supporting platen.

When utilized, the adherence-enhancing fluid can be applied to the top surface of the food-supporting platen prior to or while it is heated. Any suitable manner of application of the adherence-enhancing fluid can be utilized including brushing, spraying, roller application, squeegee or other manner of application, for example. It can be advantageous to apply the adherence-enhancing fluid and position the release sheet on the top surface of the food-supporting platen while it is at ambient temperature.

When cooking is completed, the food item(s) are removed from the food-supporting platen. In this manner, improved intimate heat transfer contact is achieved between the release sheet and the platen, thereby providing more efficient heat transfer between the platen and the food item to be cooked. The food item(s) can be removed from the platen by using a spatula that is inserted above the release sheet and below the food item(s) and manually removed by a human operator, for example. Alternatively, a removal device can be used to remove the food item(s) from the lower platen simultaneously. In those simultaneous removal embodiments, the release sheet forms part of a utensil that incorporates the release sheet and has a handle so that a user can grasp the handle and remove the release sheet and the food items from the lower cooking platen simultaneously. The utensils include a fork utensil that carries a release sheet and a release sheet-covered hoop utensil.

The cooking area is defined by the utensil. Specifically, the cooking area for the fork is between two elongated and two spaced apart fork tines. The spacing and area between the two fork tines define the cooking area. For the hoop utensil, the cooking area is defined by the area encircled by the hoop.

Also described herein is a cooking device that comprises a frame defining the cooking area, a handle attached to the frame, the handle extending away from the cooking area and a flexible-non-stick release sheet mounted to the frame, the release sheet covering the cooking area. In one embodiment, the frame is a fork having two spaced-apart tines, each having a length, the spacing between the tines and the length of the tines defining the cooking area. The release sheet may be composed of a sheet having two opposite edges, the ends spaced apart a distance that is about the spacing of the fork tines. The release sheet can be conveniently secured to the fork by inserting the tines into a sleeve that is formed along each of the two side edges of the release sheet. The spacing between the fork tines may be slightly larger than the spacing between the sleeves of the release sheet. By compressing the tines towards each other and inserting the release sheet the tines will exert a spring tension on the release sheet when the release sheet is mounted to the fork tines in that manner. This keeps the release sheet in tension so that there is minimal sag when the fork utensil is lifted from the surface of the food-supporting platen with one or more food items being located on the release sheet.

Also as described herein a frame comprises a hoop-shaped frame that surrounds an area for cooking. The release sheet is attached to the hoop-shaped frame and covers at least substantially the area surrounded by the hoop. The release sheet may be attached to the hoop-shaped frame by forming in situ a sleeve extending peripherally of the release sheet around the hoop-shaped frame.

The release sheet material for the release sheet utensils can have a thickness typically in the range of from about 0.0002 to about 0.005 inches (about 5.08 x 10⁻⁶ m to about 1.27 x 10⁻⁴ m). The material comprises a fiberglass substrate that has PTFE applied thereto which can be by, for example, lamination, dipping, impregnating or any other suitable application method. The release sheet material for the utensils need not have the same properties as the release sheet material that is merely laid over the food-supporting platen, particularly since typically a separate spatula will not be used to remove the cooked food items from the utensil release sheet device. Thus, the release sheet for the utensil devices could be thinner or thicker as desired. If desired, the release sheet material for the utensils may be selected so that an overall heat transfer coefficient from the surface of the food-supporting platen to the food contacting surface of the release sheet can be sufficient to achieve good sear on hamburger patties using a food-supporting platen temperature in the range of from about 350-450°F (117 to 232°C) and more desirably 375-425°F (190 to 218°C). Typically, such heat transfer coefficients will be in the range of from about 210 to about 350 (1,192 to about 1,987 W/K-m⁻²) or more BTU/hr-ft²-°F.

In accordance with another example, a cooking method is provided. The method includes providing at least one food-supporting platen that can be heated to cook food products placed thereon. The method further includes providing a cooking device comprising a frame that defines a cooking area and further includes a handle attached to the frame. The handle extends away from the cooking area and can optionally be removably attached to the frame. A flexible, non-stick release sheet is mounted to the frame and covers at least substantially all of the cooking area defined by the frame. The method further includes placing a cooking device on top of the heated food-supporting platen and placing at least one food item on the top surface of the release sheet.

In accordance with the invention, the food items may be placed on the top surface of the release sheet of the cooking device before or after the cooking device is placed on the top surface of the food-supporting platen. Thereafter, the at least one food item is cooked in direct contact with the release sheet while the release sheet is located on top of the heated food-supporting platen. In accordance with the invention, substantially all of the top surface of the food-supporting platen can be covered by the release sheet of the cooking device. In addition, optionally, an adherence-enhancing fluid can be applied to the surface of the heated food-supporting platen or to the lower surface of the release sheet of the cooking device.

### BRIEF DESCRIPTION OF THE SEVERAL VIEWS OF THE DRAWINGS

FIG. 1 is a perspective view of a cooking device 10 having a single heated platen 12 covered with a single full-size release sheet 14.
FIG. 2 is a perspective view of a cooking device 16 having a single heated platen 12 covered with a single full-size release sheet 14 and a thin layer of fluid 18 between the platen and release sheet.
FIG. 3 is a perspective view of a cooking device 20 having a single heated platen 12 covered with a thin layer of fluid 18 and a pair of half-size release sheets 22.
FIG. 4 is a front sectional view along line 4-4 of FIG. 2.
FIG. 5 is an exploded perspective view of the release sheet 22, showing an inner fiberglass sheet 26 between two PTFE sheets 28.
FIG. 6 is an enlarged fragmentary view of the fiber weave of fiberglass sheet 26 having wider vertical fibers 29 and narrower horizontal fibers 30.
FIG. 7 is a perspective view of an open clamshell grill 31 incorporating the release sheets 22 of the present invention.
FIG. 8 is a perspective view of the closed clamshell grill 31.
FIG. 9 is a front sectional view along line 8-8 of FIG. 8.
FIG. 10 is a plan view of a fork utensil 46.
FIG. 11 is a plan view of the fork 54 showing its tines 58 in their relaxed, splayed position.
FIG. 12 is a perspective view of the fork utensil 46 supporting food items H in an open clamshell grill 60.
FIG. 13 is a perspective illustration of clamshell grill 60 closed onto fork utensil 46 to cook food items H.
FIG. 14 is a front sectional view of the closed clamshell grill 60.
FIG. 15 is a perspective view of a hoop utensil 62 bearing a release sheet 64.
FIG. 16 is a perspective view of wire hoop 66 and handle 68 with release sheet 64 removed.
FIG. 17 is a plan view of a release sheet 64 to be hemmed.
FIG. 18 is an exploded perspective view of an alternative hoop utensil 80 having a removable handle 88.
FIG. 19 is a perspective view of the assembled hoop utensil 80.

### DETAILED DESCRIPTION OF THE INVENTION

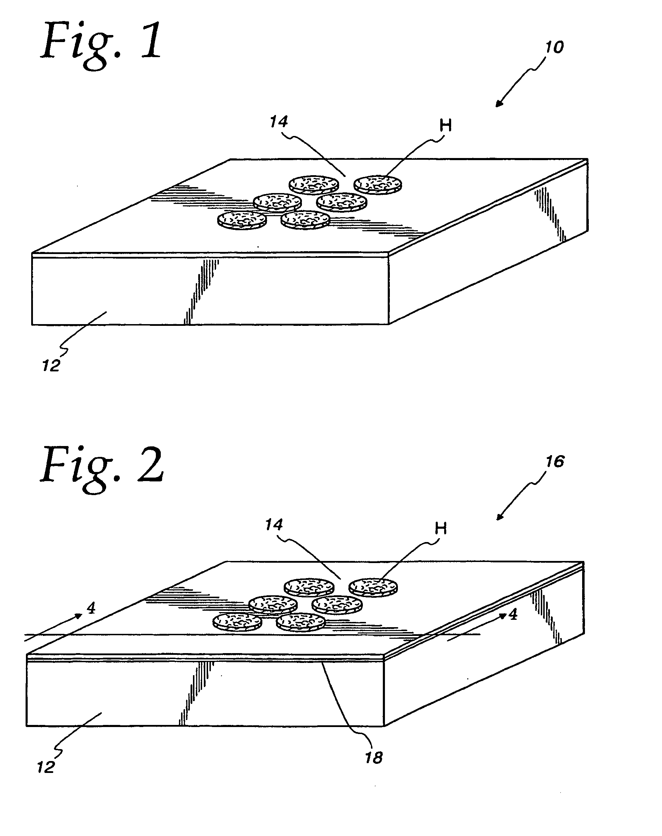

Cooking devices and methods in accordance with the invention that can provide easy cleaning and good sear, (as used herein "good sear" means good carmelization and good browning of a food product), browning and cooking of food products, including hamburger patties will be described in conjunction with FIGS. 1-19. The figures are not drawn to scale, but rather are intended to illustrate possible arrangements of elements in cooking devices described herein as will be appreciated by those skilled in the art.

FIGS. 1-3 illustrate a food-supporting platen cooking device that can be part of a clamshell grill arrangement. Referring to Figure 1, a cooking device 10 having a single food-supporting platen 12 removably covered with a single full-size non-stick, low-friction release sheet 14 is shown. Food- supporting platen 12 typically has a flat cooking surface. Cooking device 10 may be, for example, a single surface griddle or may be the lower platen of a clamshell grill. Any food item H as desired, such as a hamburger patty, sausage, fish fillet, chicken breast, hot dog, pancake, egg, bacon strip, Canadian bacon, mushroom or vegetable, may be placed on release sheet 14 as shown for contact grilling or cooking.

Release sheet 14 should have sufficient stiffness to permit removal of food products from the release sheet with a spatula and cleaning of the release sheet with a squeegee or cloth when the release sheet is removably laid over food-supporting platen 12, even when the release sheet is not retained by any mechanical structure. In other words, release sheet 14 merely lays on the surface of food-supporting platen 12. Additionally, in this embodiment, release sheet 14 in contact with food-supporting platen 12 should have an overall heat transfer coefficient from the platen surface to the food contacting surface of the release sheet of from about 210 BTU/ hr-ft²-°F (1,192 W/K-m²) including, for example, about 250 BTU/hr-ft²-°F (1,420 W/K-m²), about 300 BTU/hr-fr²-°F (1,703 W/K-m²), about 350 BTU/hr-ft²-°F (1,987 W/K-m²) or greater, and should provide good sear and browning of proteins when the food item H is a proteinaceous food item such a hamburger patty. Thus, overall heat transfer coefficients of 250, 300, 350 or greater BTU/ hr-ft²-°F (1,420, 1,703, 1,987 W/K-m²) and values therebetween are contemplated. Surprisingly, it has been discovered that a thin release sheet composed of PTFE laminated fiberglass adheres well when laid on top of a horizontal heated platen, provides good sear and browning of proteins, significantly reduces the incidence of fissures in hamburger patties, and does not wrinkle when heated, thus allowing for removal of food items with a spatula without significantly dislodging or disturbing the release sheet and easy cleaning with a squeegee or grill cloth. The PTFE sheets of the invention save significant time and effort by eliminating the need for the laborious scraping required to clean a bare metallic platen and the sharpening of tools used to scrape the platen. Conveniently, release sheet 14 may be simply lifted off of platen 12 to be thoroughly cleaned or discarded and replaced with a clean or a new release sheet 14.

Turning to Figure 2, a preferred cooking device 16 having a single heated food-supporting platen 12 covered with a single release sheet 14 and a thin layer of adherence-promoting fluid 18 between the platen and release sheet is shown. It has been found that a layer of an adherence-promoting fluid, which may be ordinary cooking oil, such as sunflower oil or the like, results in even better adherence between a single or lower heated platen and a release sheet laid thereon, providing still easier cleaning as well as better sear and browning. The fluid layer 18 is applied by any suitable method and device including, for example, spraying, brushing or a similar method in an amount ranging from about 1.1 grams/ft² (1.18 x 10⁻² kg/m²) to about 18 grams/ft² (1.93 x 10⁻¹ kg/m²). Any excess oil can be squeegeed from the surface.

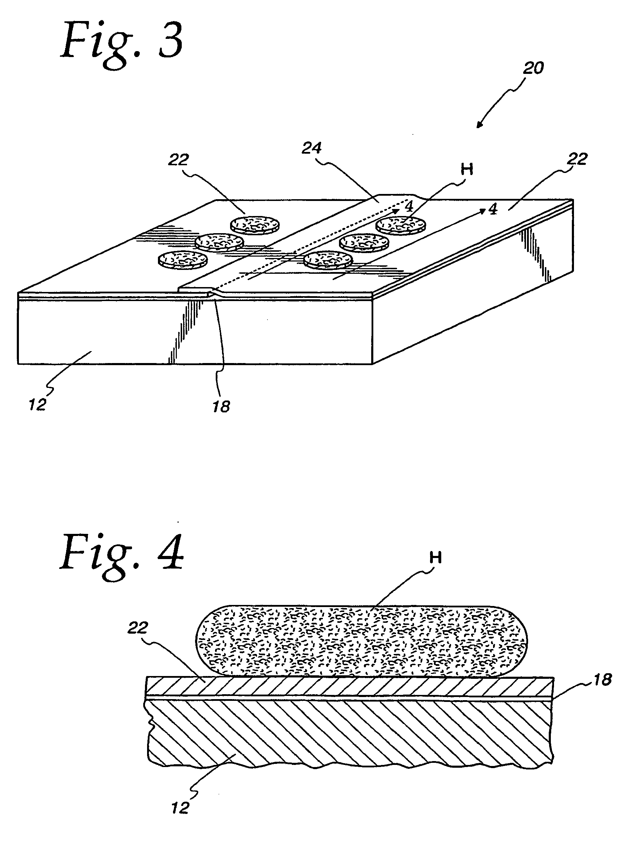

Figure 3 illustrates another example in which a portion of a clamshell grill platen cooking device 20 is shown having a heated food-supporting platen 12 covered with a pair of half-size release sheets 22 and a layer of adherence- enhancing fluid 18 between the platen and release sheets. It has been found that smaller release sheets are easier to orient and lay on the platen surface, saving time and effort required for placement of the sheets, particularly for platens that are about 2' wide (0.051 m) x 3' long (0.076 m), for example. Preferably, the sheets should each have an area slightly more than one half that of the heated platen, to provide an overlap area 24, thus preventing migration of oil from cooking or other undesired material to the platen surface. For example, it has been found that an overlap area about 2 inches wide effectively prevents any migration of unwanted material under the release sheets during a full day of use.

Figure 4 is a fragmentary sectional view of a portion of cooking device 20 of Figure 3, illustrating the stacked relationship of a food item H1 a release sheet 22, a layer of fluid 18, and a single platen 12.

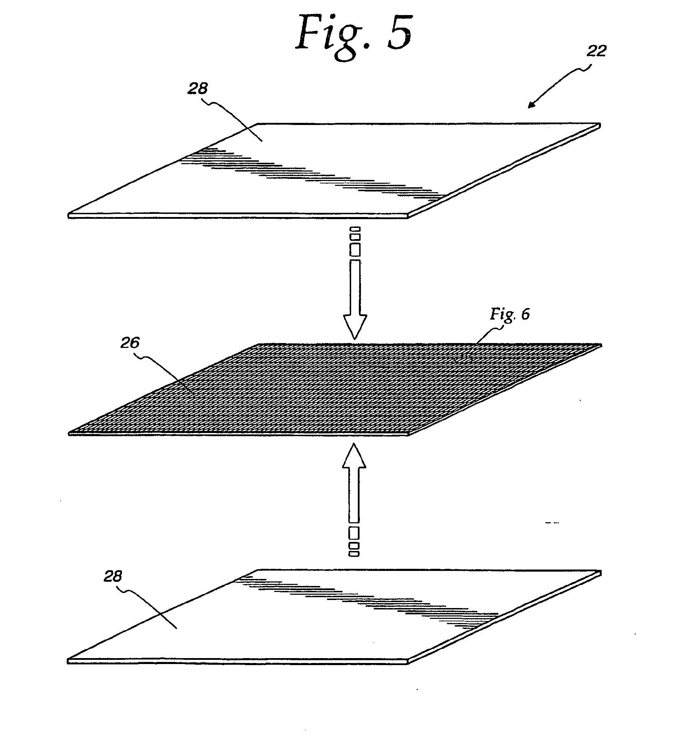

Figure 5 is an exploded perspective view illustrating the layered structure of a preferred form of release sheet 22. As shown, release sheet 22 comprises a fiberglass sheet 26 sandwiched between two PTFE sheets 28. The PTFE sheets may be laminated onto the fiberglass sheet 26, by means of pressure and/or heat. Release sheet 22 is preferably between about 0.001 and 0.003 inch (2.54 x 10⁻⁵ and 7.62 x 10⁻⁵ m) thick, more preferably between about 0.0016 and 0.0026 in. (4.06 x 10⁻⁵ and 6.60 x 10⁻⁵ m) thick, and still more preferably about 0.0021 in. (5.34 x 10⁻⁵ m) thick.

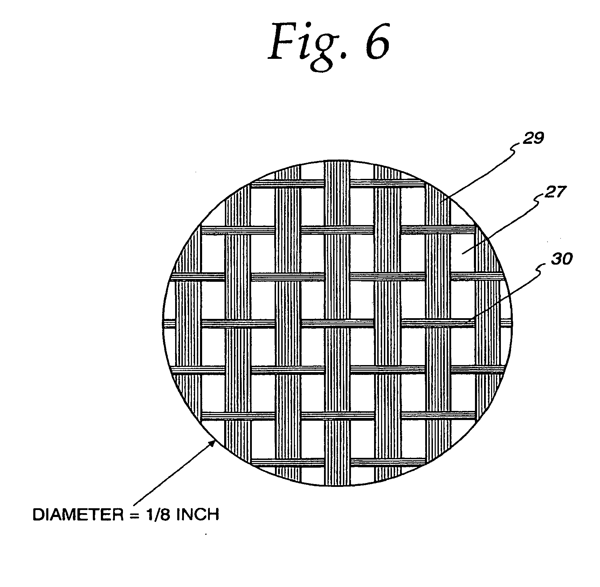

Referring to Figure 6, a greatly enlarged view of a portion of the fiberglass sheet 26 is shown. As seen in the figure, the fiberglass sheet is composed of a woven mesh of wider vertical fibers 29 and narrower horizontal fibers 30, oriented at right angles, with about 7 fibers per 1/8 inch in each direction, providing numerous void spaces 27.

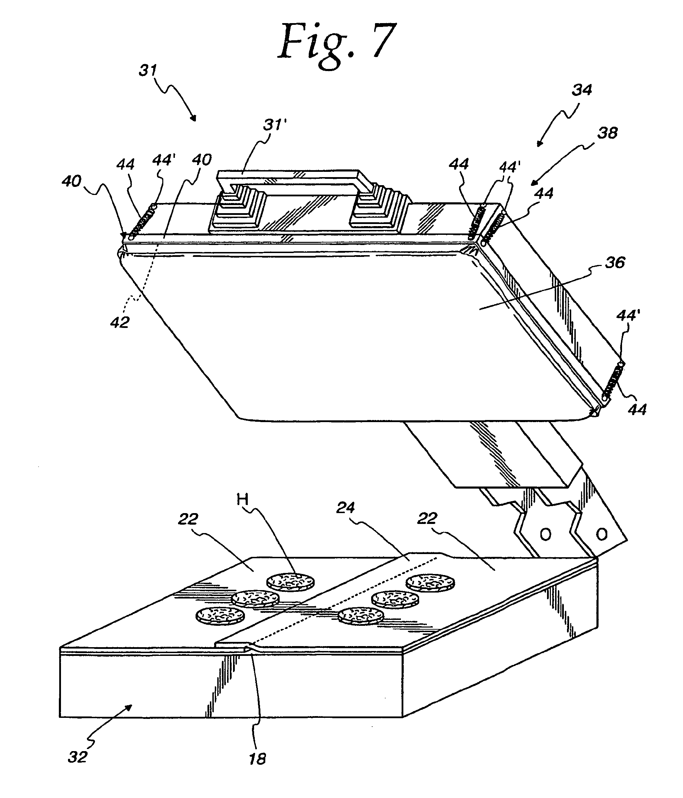

Figure 7 is a perspective view of one example embodied in a clamshell grill 31 having lower and upper heated platens 32 and 34. As shown, lower platen 32 is covered with a pair of half-size release sheets 22 and a thin layer of fluid 18 in the same manner as the single platen 12 depicted in Figure 3. Upper platen 34 has a handle 31' for conveniently opening and closing upper platen 34 and is covered with an upper release sheet 36 retained in contact with upper platen 34 by dynamic release sheet tensioning system 38. Dynamic tensioning system 38 is composed of a tapered outer frame 40, a smaller tapered inner frame 42 nested within outer frame 40, and springs 44, secured to pins 44' which provide tension on release sheet 36.

Other securing assemblies may also be suitable such as an opposed pair or a plurality of spring-tensioned clips or hooks arranged about the perimeter of the release sheet. Moreover, as alternatives to the dynamic tensioning system 38, upper release sheets 36 may instead be retained by a heat transfer enhancing adhesive, or in the case of a very thin release sheet, by simply "clinging" to the surface of upper platen 34. For instance a static charge may be generated on the sheet prior to mounting, thereby creating a static electric cling force that holds the sheet in contact with the platen.

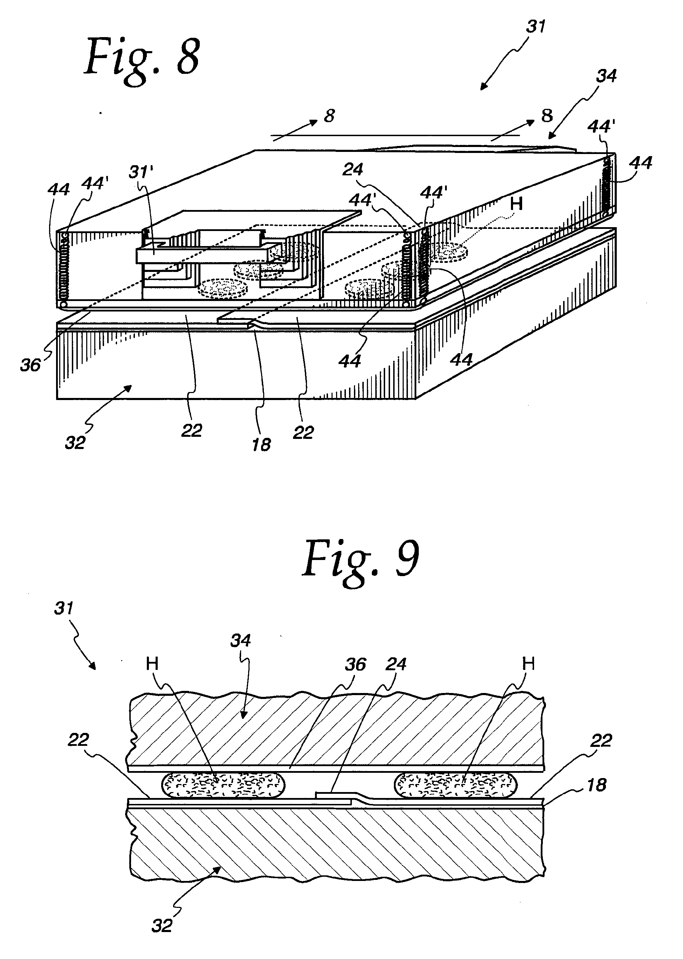

Turning to Figures 8-9, clamshell grill 31 is illustrated in its closed position. Figure 8 is a perspective view of the closed clamshell grill 31, and Figure 9 is a front sectional view along line 8-8 of Figure 8. Optionally but desirably, a heat transfer enhancing material 18 such as a grease, adhesive or fluid may be disposed between lower platen 32 and release sheets 22, as shown in Figures 8 and 9.

A cooking device similar to that depicted in Figure 9 was tested on cooking hamburger patties, where the release sheets 22 were 0.002-inch (5.08 x 10⁻⁵ m) thick PTFE- laminated fiberglass sheets available from Saint-Gobain Performance Plastics Corp. under the trade designation Chemfab CF102. CF102 is a PTFE-coated fiberglass having a high content of polytetrafluoroethylene (PTFE) (a resin content of 74 percent), and a smooth surface. CF1 02 has a weight of 2.80 ounces/square yard (9.50 x 10⁻² kg/m²), a warp breaking strength of 55 pounds per inch (982 kg/m) and a fill breaking strength of 50 pounds per inch (893 kg/m). Fluid layer 18 was about 2 grams (2 x 10⁻³ kg) of sunflower oil per square foot applied to the platen by spraying, and upper release sheet 36 was a 0.0045-inch (1.14 x 10⁻⁴ m) thick PTFE impregnated fiberglass sheet. Lower platen 32 was set at a nominal temperature of 400°F (204°C), and upper platen 34 at a nominal temperature of 425°F (218°C). Surprisingly, the device was found to provide good sear and browning of the patties, without wrinkling of lower release sheets 22. It is believed that inner fiberglass sheet 26 prevented wrinkling by providing release sheet 22 with some rigidity. Moreover, another significant unexpected benefit was achieved, namely, the mean temperature variation within the patties cooked was Significantly decreased compared to the temperature variation within patties cooked in a clamshell grill having a bare lower platen set at 350°F (177°C).

Without wishing to be bound by theory, it is believed that temperature variation within patties may be caused by the concentration of heat in a heated platen at the locations of a finite number of heaters. The lower platen of the clamshell grill tested had three heaters distributed across a 2 ft x 3 ft (0.620 m x 0.914 m) cooking area. In the aforementioned comparison testing, 0.1 lb. (4.54 x 10⁻² kg) patties cooked in the bare lower platen clamshell grill for about 38 seconds had an observed inner temperature ± 3 standard deviation range of 55°F (12.8°C) (standard deviation was 9.1°F (12.8°C)), while 0.1 lb. (4.54 x 10⁻² kg) patties cooked in the grill of the present invention for about 41 seconds had an observed inner temperature ± 3 standard deviation range of 29°F (1.67°C) (standard deviation of 4.8°F (15.1°C)), a 53% reduction in internal temperature range. A 30% reduction in temperature range (± 3 standard deviation range) was achieved in 0.25 lb. (1.13 x 10⁻¹ kg) patties, which had a ± 3 standard deviation range of 75°F (23.9°C) (standard deviation of 12.5°F (10.8°C) after cooking on the bare lower platen grill for about 104 seconds and only a ± 3 standard deviation range of 53°F (11.7°C) (standard deviation of 8.8°F (12.9°C)) after cooking on the grill of the present invention for about 109 seconds. All internal temperature data were taken at various locations in the hamburger patties, all at a patty midpoint depth. Reduced temperature variation in hamburger patties is an important benefit, because many restaurant customers prefer meat that is not overcooked, while a minimum temperature of 155°F (68.3°C) throughout a cooked ground beef food item is required by the FDA Model Food Code.

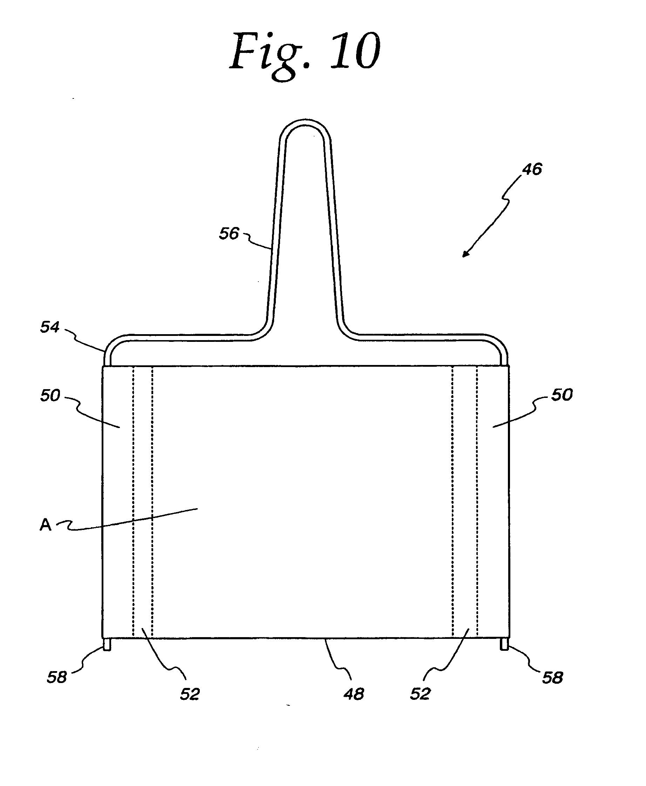

Turning to Figures 10-11, a fork utensil 46 is illustrated. Fork utensil 46 is composed of a release sheet 48 having parallel sleeved ends 50 attached at seams 52 and a fork 54 with a handle 56 and tines 58. As shown in Figure 10, the tines 58 are inserted into sleeved ends 50, so that tines 58 define a cooking area A on release sheet 48. Advantageously, fork utensil 46 may be used to cook a plurality of food items H on a heated platen, simultaneously remove all of the cooked food items and release sheet 48 from the platen, and quickly transfer the food items to another location. Moreover, release sheet 48 is easily removed from fork utensil 46, and then it may either be cleaned and replaced or discarded and substituted with a new release sheet 48. This saves time when compared to the laborious scraping and sharpening of utensils associated with cleaning a bare metallic platen, as noted above.

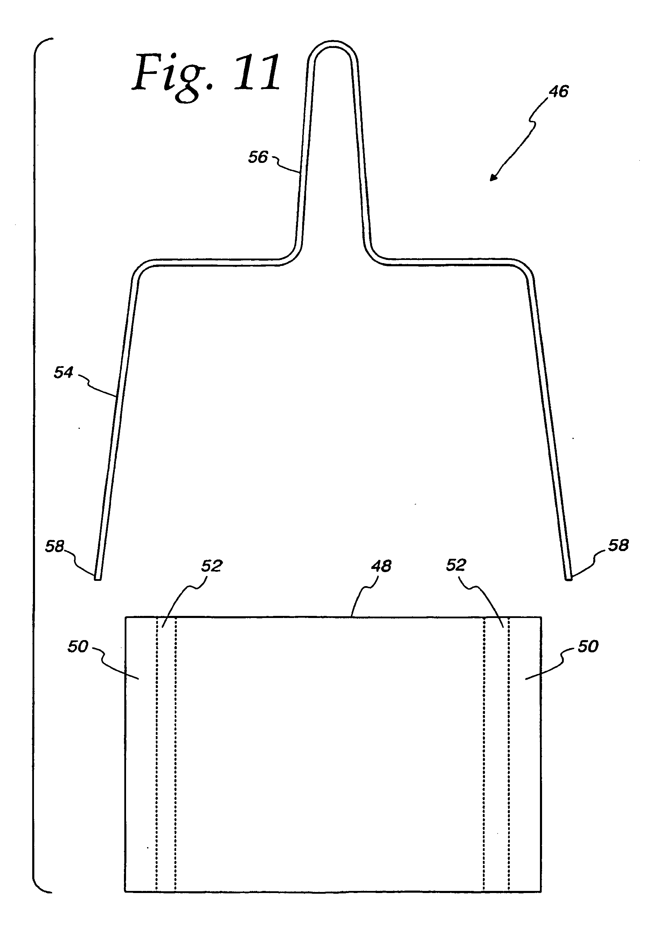

Tines 58 preferably provide an outward tension T on release sheet 48, to prevent the release sheet from sagging under the weight of the food items when fork utensil 46 is lifted. In the embodiment illustrated in the figures, this is achieved by providing a fork 54 whose tines 58 are relaxed at a splayed angle, such that they provide outward tension when they are urged into a parallel orientation. Hence, Figure 11 illustrates the relaxed, splayed position of tines 58, which must be urged inwardly before insertion into parallel sleeved ends 50. Those skilled in the art will recognize that any equivalent manner of providing outward tension in release sheet 48 will also suffice, as long as the tension provided is sufficient to support the weight of a plurality of food items without excessive sagging of the release sheet. Preferably, the fork utensil 46 should support nine 0.1 -lb (4.54 x 10⁻² kg) hamburger patties without excessive sagging.

As tines 58 provide tension to release sheet 48, stiffness of release sheet 48 is not as important as in the prior embodiments. Accordingly, release sheet 48 may be composed of any suitable non-stick material including a thin film of pure PTFE, as well as a fiberglass sheet laminated, impregnated or dip-coated with PTFE, provided that it will support the weight of a plurality of food items. Preferably, release sheet 48 is between about 0.0002 and about 0.005 inch (5.08 x 10⁻⁵ m, 1.27 x 10⁻⁴ m) thick.

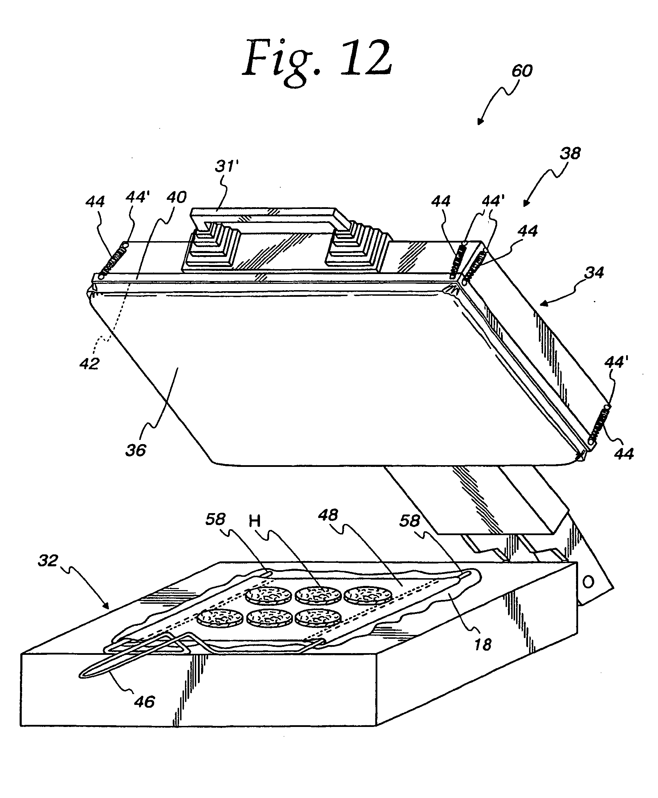

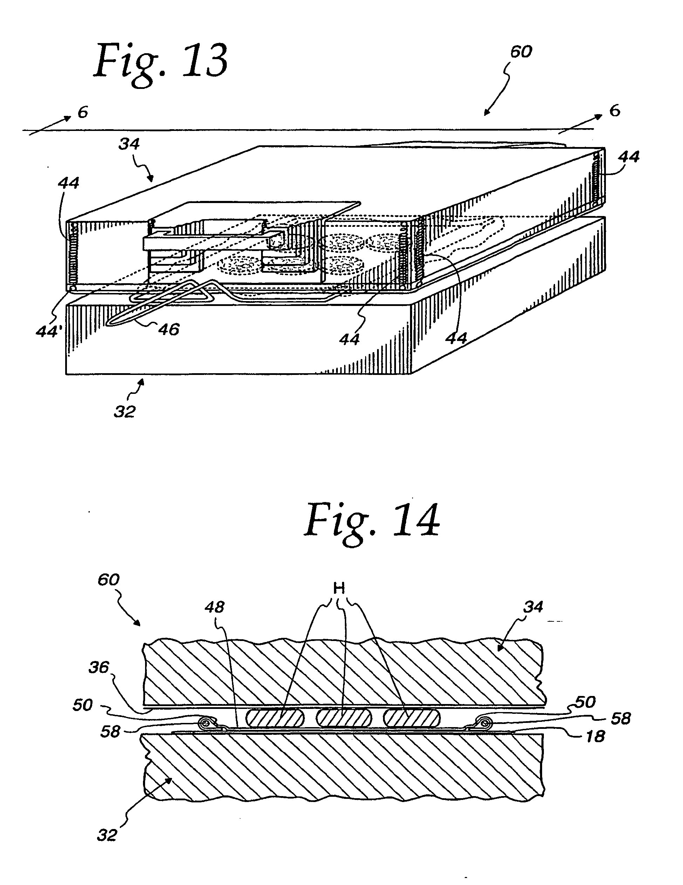

Figures 12-14 illustrate a clamshell grill 60 used to cook food items H on fork utensil 46. Similarly to the clamshell grill embodiments illustrated in previous figures, lower platen 32 is optionally but desirably coated with a layer of adherence enhancing fluid 18 as shown in Figure 12, and fork utensil 46 placed on top of fluid layer 18. Again, upper release sheet 36 is shown mounted to upper platen 34 by dynamic tensioning system 38. Figure 13 shows clamshell grill 60 in its closed position, and Figure 14 is a front sectional view of the closed clamshell grill 60.

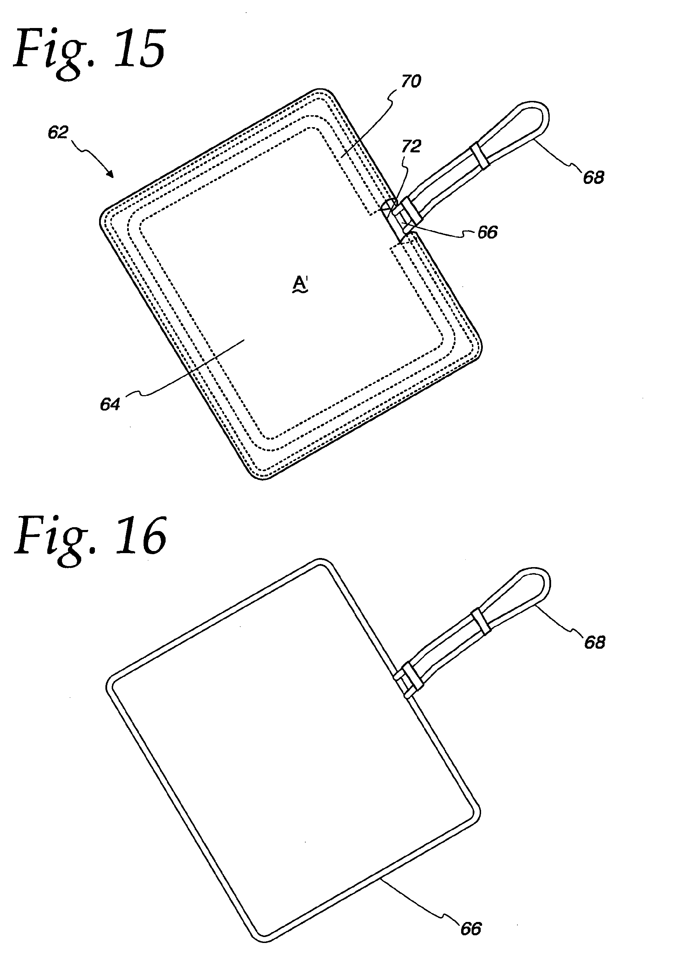

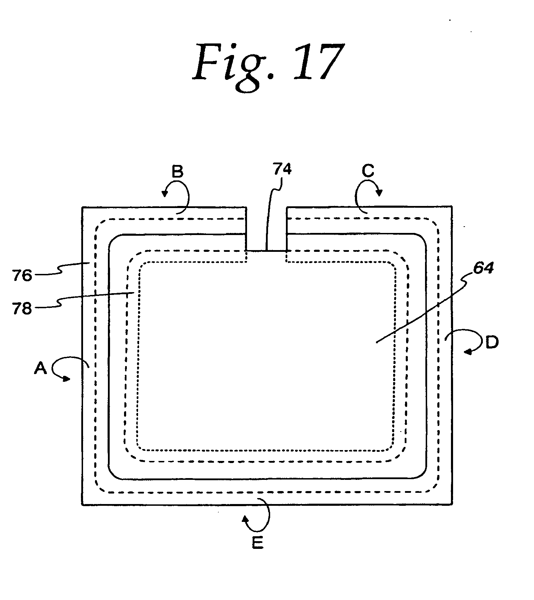

Figures 15-17 illustrate a hoop utensil 62. As shown in Figure 15, hoop utensil 62 is composed of a peripherally sleeved release sheet 64 mounted to a wire hoop 66 attached to a handle 68, wire hoop 66 defining a cooking area A' on the release sheet 64. Peripheral seam 70 of release sheet 64 extends around substantially the entire periphery of the release sheet, and is interrupted only by a gap 72. Gap 72 corresponds to the attachment point of handle 68 to wire hoop 66. Figure 16 shows wire hoop 66 and handle 68 without release sheet 64. Figure 17 illustrates how the sleeve in release sheet 64 may be formed. As shown, release sheet 64 is made from a flat square sheet with a square notch 74 cut out. Then, outer attachment region 76 is folded under the sheet to align with inner attachment region 78 as indicated by arrows A-E, and the attachment regions 76 and 78 are joined by any suitable means, such as an adhesive.

Release sheet 64, like release sheet 48 used with fork utensil 46, may be composed of any suitable non-stick material, including a thin film of pure PTFE or a fiberglass sheet laminated, impregnated or dip-coated with PTFE, and is preferably between about 0.0002 and about 0.005 inch (5.08 x 10⁻⁵ m., 1.27 x 10⁻⁴ m) thick.

Referring to Figures 15-19, similarly to fork utensil 46, hoop utensil 62 saves significant time and effort when compared to cooking on a bare platen by allowing the simultaneous removal of a plurality of food items and a release sheet 64 on which the food items are cooked, as well as the rapid transfer of the food items to another location. Conveniently, release sheet 64 may be removed and discarded to be substituted with a new release sheet 64.

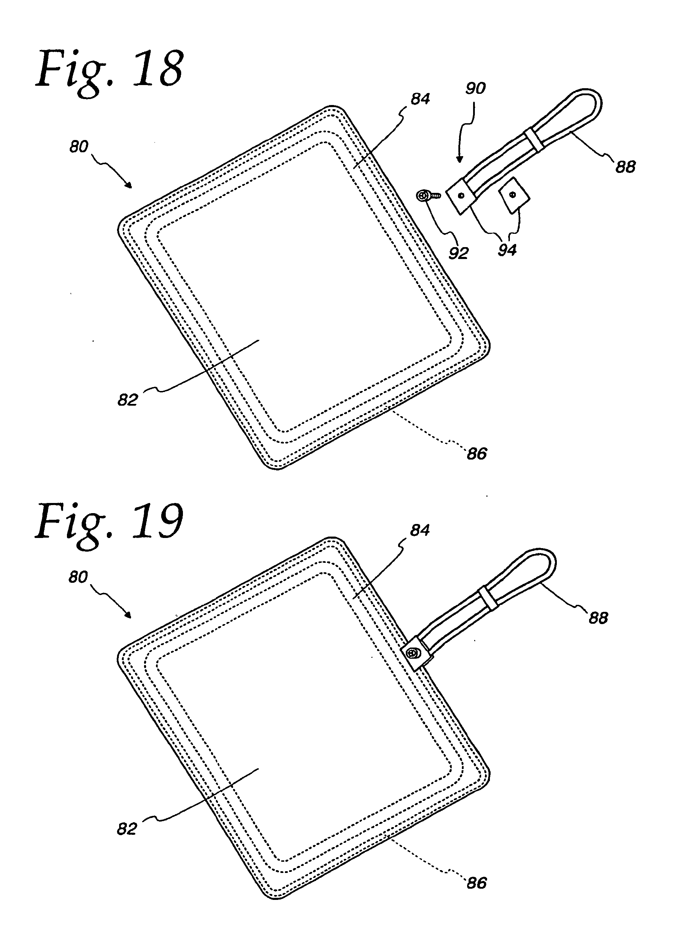

Illustrating an alternative embodiment, Figures 18-19 show a hoop utensil 80 having a peripherally-sleeved release sheet 82 with an uninterrupted seam 84, wrapped around a wire hoop 86. Hoop utensil 80 features a removable handle 88, thus eliminating the need for an interruption in the release sheet seam. Figure 18 is an exploded view showing removable handle 88 and attachment assembly 90 separate from wire hoop 86 composed of a bolt 92 and threaded plates 94 to attach handle 88 to hoop 86. Any suitable attachment configuration can be utilized. Figure 19 shows assembled hoop utensil 80. Conveniently, the easy assembly and disassembly of hoop utensil 80 permits release sheet 82 and wire hoop 86 to be removed and cleaned or discarded as a unit. Then they may be reattached or substituted with a new wire hoop 86 covered by a new release sheet 82, as desired.

Food-supporting platens described herein are preferably substantially flat, metallic platens of a type widely used in contact grills, such as a clamshell grill typical of the fast food industry. Typically, the platens are stainless steel.

While the invention has been described with respect to certain preferred embodiments, as will be appreciated by those skilled in the art, it is to be understood that the invention is capable of numerous changes, modifications and rearrangements and such changes, modifications and rearrangements are intended to be covered by the following claims.

## Claims

1. A cooking device (16) comprising: a) a food-supporting cooking platen (12) for supporting food items to be cooked; and b) at least one flexible, non-stick release sheet (14, 22) removably laid on top of the food- supporting platen (12), **characterised in that** the release sheet (14, 22) comprises a fiberglass substrate layer (26) having a thin film PTFE layer (28) on each side of the fiberglass substrate, the release sheet (14, 22) having sufficient stiffness to permit removal of food products from the release sheet (14, 22) with a spatula when the release sheet is laid over the food-supporting platen (12) and wherein the release sheet in contact with the platen has an overall heat transfer coefficient from the surface of the food-supporting platen to the food contacting surface of the release sheet of at least about 210 BTU/hr-ft²-°F (1,192 W/K-m²) under a cooking temperature of between about 350°F (177°C) to about 450°F (232°C) in the case where the food item supported upon the food contacting surface is a hamburger pattie.

2. The cooking device (16) of claim 1, further comprising c) an adherence-enhancing fluid (18) between the platen and the release sheet.

3. The cooking device (16) of claim 1 or 2, wherein:
said adherence-enhancing fluid (18) is selected from the group consisting of oils, fats, lubricants and mixtures thereof; and/or
the at least one release sheet (14, 22) substantially covers the top surface of the food-supporting platen (12); and/or
the release sheet (14, 22) is at least substantially liquid-impermeable; and/or
the release sheet (14, 22) has a thickness of from about 0.001 inches (2.54 x 10⁻⁵ m) to about 0.003 inches (7.62 x 10⁻⁵ m); and/or
the release sheet (14, 22) has a thickness of about 0.002 inches (5.08 x 10⁻⁵ m).

4. The cooking device (16) of any of claims 1 to 3, wherein the overall heat transfer coefficient is greater than about 250 BTU/ hr-ft²-°F (1,420 W/K-m²), optionally wherein the overall heat transfer coefficient is greater than about 300 BTU/hr-ft²-°F (1,703 W/K-m²).

5. The cooking device (16) of any of claims 1 to 4, wherein the fiberglass substrate (26) is composed of a woven mesh of fibers defining a plurality of void spaces between the fibers, optionally wherein the woven mesh is composed of a plurality of parallel wider fibers (29) of approximately the same wider width oriented at right angles to a plurality of parallel narrower fibers (30) of approximately the same narrower width, and optionally wherein the woven mesh includes about seven fibers per 1/8 inch in each of two perpendicular directions.

6. The cooking device (16) of any of claims 1 to 5, wherein the flexible, non-stick release sheet (14, 22) includes only three layers, being the thin film PTFE layer (28) on each side of the fiberglass substrate (26).

7. A cooking method comprising: providing at least one heated food-supporting platen (12); removably placing at least one flexible, non-stick release sheet (14, 22) on top of the heated food- supporting platen (12), **characterised in that** the release sheet is a fiberglass substrate layer (26) having a thin film PTFE layer (28) on each side of the fiberglass substrate (26), the release sheet (14, 22) having sufficient stiffness to permit removal of food products from the release sheet with a spatula when the release sheet is laid over the food-supporting platen (12) and wherein the release sheet (14, 22) in contact with the platen (12) has an overall heat transfer coefficient from the surface of the food-supporting platen to the food contacting surface of the release sheet of at least about 210 BTU/hr-ft²-°F (1192 W/K-m²) under a cooking temperature of between about 350°F (177°C) to about 450°F (232°C) in the case where the food item supported upon the food contacting surface is a hamburger pattie; placing at least one food item on the top surface of the release sheet (14, 22); and cooking a food item in direct contact with the release sheet (14, 22).

8. The method of claim 7, wherein:
said removably placing at least one flexible, non-stick release sheet (14, 22) on top of the heated food-supporting platen (12) comprising substantially covering the top surface of the platen 12) with the at least one release sheet (14, 22); optionally wherein the method further comprises:
removing the at least one food item from the top surface of the release sheet (14, 22), optionally wherein said removing comprises removing the food item with a spatula inserted between the food item and the top of the release sheet (14, 22), or removing the at least one food item and the release sheet simultaneously from the food-supporting platen (12).

9. The cooking method of claim 7 or 8, comprising applying an adherence-enhancing fluid (18) to the surface of the heated food-supporting platen (12).

10. The method of claim 9, wherein said placing at least one flexible, removable non-stick release sheet (14, 22) on top of the heated food-supporting platen (12) comprises substantially covering the top surface of the platen (12) with the at least one release sheet (14, 22).

11. The method of claim 9 or 10, wherein said applying an adherence-enhancing fluid (18) to the surface of the heated platen (12) comprises cooking a food item in direct contact with the heated platen (12) to produce from the food item an adherence-enhancing fluid (18) selected from the group consisting of oils, fats, lubricants and mixtures thereof.

12. The method of claim 9 or 10, wherein said applying an adherence-enhancing fluid (18) to the surface of the heated platen (12) comprises applying an adherence-enhancing fluid selected from the group consisting of oils, fats, lubricants and mixtures thereof, optionally said applying an adherence-enhancing fluid comprises spraying a cooking oil onto the surface of the heated platen (12).

13. The method of any of claims 9 to 12, the method comprising removing the at least one food item from the top surface of the release sheet (14, 22), optionally wherein said removing comprising removing the food item with a spatula inserted between the food item and the top of the release sheet (14, 22) or said removing comprising removing the at least one food item and the release sheet simultaneously from the food-supporting platen (12).

14. The method of any of claims 9 to 13, wherein the at least one food item comprises a plurality of hamburger patties.

15. The method of any of claims 9 to 14, wherein the release sheet (14, 22) is at least substantially liquid impermeable.

## Patentansprüche

1. Kochvorrichtung (16), die Folgendes umfasst: a) eine lebensmitteltragende Kochplatte (12) zum Tragen von zu kochenden Lebensmittelartikeln; und b) wenigstens eine flexible, haftfreie Ablöseschicht (14, 22), die entfernbar auf der Oberseite der lebensmitteltragenden Platte (12) liegt, **dadurch gekennzeichnet, dass** die Ablöseschicht (14, 22) eine Glasfasersubstratlage (26) mit einer Dünnfilm-PTFE-Lage (28) auf jeder Seite des Glasfasersubstrats umfasst, wobei die Ablöseschicht (14, 22) eine ausreichende Steifigkeit hat, um das Entfernen von Lebensmittelprodukten von der Ablöseschicht (14, 22) mit einer Spachtel zu ermöglichen, wenn die Ablöseschicht auf der lebensmitteltragenden Platte (12) liegt, und wobei die Ablöseschicht in Kontakt mit der Platte einen Gesamtwärmetransferkoeffizienten von der Oberfläche der lebensmitteltragenden Platte zur Lebensmittelkontaktfläche der Ablöseschicht von wenigstens etwa 210 BTU/h-ft²-°F (1192 W/K-m²) bei einer Kochtemperatur zwischen etwa 350°F (177°C) und etwa 450°F (232°C) hat, wenn der auf der Lebensmittelkontaktfläche befindliche Lebensmittelartikel eine Hamburgerfrikadelle ist.

2. Kochvorrichtung (16) nach Anspruch 1, die ferner c) ein Haftverbesserungsfluid (18) zwischen der Platte und der Ablöseschicht umfasst.

3. Kochvorrichtung (16) nach Anspruch 1 oder 2, wobei:
das genannte Haftverbesserungsfluid (18) aus der Gruppe bestehend aus Ölen, Fetten, Schmiermitteln und Gemischen davon ausgewählt ist; und/oder
die wenigstens eine Ablöseschicht (14, 22) die Oberfläche der lebensmitteltragenden Platte (12) im Wesentlichen bedeckt; und/oder
die Ablöseschicht (14, 22) wenigstens im Wesentlichen flüssigkeitsundurchlässig ist; und/oder
die Ablöseschicht (14, 22) eine Dicke von etwa 0,001 Zoll (2,54 x 10⁻⁵ m) bis etwa 0,003 Zoll (7,62 x 10⁻⁵ m) hat; und/oder
die Ablöseschicht (14, 22) eine Dicke von etwa 0,002 Zoll (5,08 x 10⁻⁵ m) hat.

4. Kochvorrichtung (16) nach einem der Ansprüche 1 bis 3, wobei der Gesamtwärmetransferkoeffizient größer als etwa 250 BTU/h-ft²-°F (1420 W/K-m²) ist, wobei der Gesamtwärmetransferkoeffizient optional größer als etwa 300 BTU/h-ft²-°F (1703 W/K-m²) ist.

5. Kochvorrichtung (16) nach einem der Ansprüche 1 bis 4, wobei das Glasfasersubstrat (26) aus einem gewebten Fasernetz besteht, das mehrere Hohlräume zwischen den Fasern definiert, wobei das gewebte Netz optional aus mehreren parallelen breiteren Fasern (29) mit etwa derselben breiteren Breite besteht, die im rechten Winkel zu mehreren parallelen schmäleren Fasern (30) mit etwa derselben schmäleren Breite orientiert sind, und wobei das gewebte Netz optional etwa sieben Fasern pro 1/8 Zoll in jeder von zwei lotrechten Richtungen beinhaltet.

6. Kochvorrichtung (16) nach einem der Ansprüche 1 bis 5, wobei die flexible, haftfreie Ablöseschicht (14, 22) nur drei Lagen beinhaltet, und zwar die Dünnfilm-PTFE-Lage (28) auf jeder Seite des Glasfasersubstrats (26).

7. Kochverfahren, das Folgendes beinhaltet:
Bereitstellen von wenigstens einer erhitzten lebensmitteltragenden Platte (12); entfernbares Platzieren von wenigstens einer flexiblen, haftfreien Ablöseschicht (14, 22) auf der erhitzten lebensmitteltragenden Platte (12), **dadurch gekennzeichnet, dass** die Ablöseschicht (14, 22) eine Glasfasersubstratlage (26) mit einer Dünnfilm-PTFE-Lage (28) auf jeder Seite des Glasfasersubstrats (26) ist, wobei die Ablöseschicht (14, 22) eine ausreichende Steifigkeit hat, um das Entfernen von Lebensmittelprodukten von der Ablöseschicht mit einer Spachtel zu ermöglichen, wenn die Ablöseschicht auf der lebensmitteltragenden Platte (12) liegt, und wobei die Ablöseschicht (14, 22) in Kontakt mit der Platte (12) einen Gesamtwärmetransferkoeffizienten von der Oberfläche der lebensmitteltragenden Platte zur Lebensmittelkontaktfläche der Ablöseschicht von wenigstens etwa 210 BTU/h-ft²-°F (1192 W/K-m²) bei einer Kochtemperatur zwischen etwa 350°F (177°C) und etwa 450°F (232°C) hat, wenn der auf der Lebensmittelkontaktfläche getragene Lebensmittelartikel eine Hamburgerfrikadelle ist; Platzieren von wenigstens einem Lebensmittelartikel auf der Oberfläche der Ablöseschicht (14, 22); und Kochen eines Lebensmittelartikels in direktem Kontakt mit der Ablöseschicht (14, 22).

8. Verfahren nach Anspruch 7, wobei:
das genannte entfernbare Platzieren von wenigstens einer flexiblen, haftfreien Ablöseschicht (14, 22) auf der erhitzten lebensmitteltragenden Platte (12) das wesentliche Bedecken der Oberfläche der Platte (12) mit der wenigstens einen Ablöseschicht (14, 22) beinhaltet; wobei das Verfahren optional ferner Folgendes beinhaltet:
Entfernen des wenigstens einen Lebensmittelartikels von der Oberfläche der Ablöseschicht (14, 22), wobei das genannte Entfernen optional das Entfernen des Lebensmittelartikels mit einer zwischen den Lebensmittelartikel und der Oberseite der Ablöseschicht (14, 22) eingefügten Spachtel oder das Entfernen des wenigstens einen Lebensmittelartikels und der Ablöseschicht gleichzeitig von der lebensmitteltragenden Platte (12) beinhaltet.

9. Kochverfahren nach Anspruch 7 oder 8, das das Aufbringen eines Haftverbesserungsfluids (18) auf die Oberfläche der erhitzten lebensmitteltragenden Platte (12) beinhaltet.

10. Verfahren nach Anspruch 9, wobei das genannte Platzieren von wenigstens einer flexiblen, entfernbaren, haftfreien Ablöseschicht (14, 22) auf der Oberseite der erhitzten lebensmitteltragenden Platte (12) das wesentliche Bedecken der Oberfläche der Platte (12) mit der wenigstens einen Ablöseschicht (14, 22) beinhaltet.

11. Verfahren nach Anspruch 9 oder 10, wobei das genannte Aufbringen eines Haftverbesserungsfluids (18) auf die Oberfläche der erhitzten Platte (12) das Kochen eines Lebensmittelartikels in direktem Kontakt mit der erhitzten Platte (12) beinhaltet, um aus dem Lebensmittelartikel ein Haftverbesserungsfluid (18) zu produzieren, das aus der Gruppe bestehend aus Ölen, Fetten, Schmiermitteln und Gemischen davon ausgewählt ist.

12. Verfahren nach Anspruch 9 oder 10, wobei das genannte Aufbringen eines Haftverbesserungsfluids (18) auf die Oberfläche der erhitzten Platte (12) das Aufbringen eines Haftverbesserungsfluids beinhaltet, das aus der Gruppe bestehend aus Ölen, Fetten, Schmiermitteln und Gemischen davon ausgewählt ist, wobei das genannte Aufbringen eines Haftverbesserungsfluids optional das Sprühen eines Speiseöls auf die Oberfläche der erhitzten Platte (12) beinhaltet.

13. Verfahren nach einem der Ansprüche 9 bis 12, wobei das Verfahren das Entfernen des wenigstens einen Lebensmittelartikels von der Oberfläche der Ablöseschicht (14, 22) beinhaltet, wobei das genannte Entfernen optional das Entfernen des Lebensmittelartikels mit einem zwischen den Lebensmittelartikel und der Oberseite der Ablöseschicht (14, 22) eingefügten Spachtel beinhaltet oder das genannte Entfernen das Entfernen des wenigstens einen Lebensmittelartikels und der Ablöseschicht gleichzeitig von der lebensmitteltragenden Platte (12) beinhaltet.

14. Verfahren nach einem der Ansprüche 9 bis 13, wobei der wenigstens eine Lebensmittelartikel mehrere Hamburgerfrikadellen beinhaltet.

15. Verfahren nach einem der Ansprüche 9 bis 14, wobei die Ablöseschicht (14, 22) wenigstens im Wesentlichen flüssigkeitsundurchlässig ist.

## Revendications

1. Dispositif de cuisson (16) comprenant : a) une plaque de cuisson destinée à porter des aliments (12) conçue pour porter des produits alimentaires à cuire ; et b) au moins une feuille de séparation flexible, anti-adhésive (14, 22) disposée de façon amovible sur le dessus de la plaque destinée à porter des aliments (12), **caractérisé en ce que** la feuille de séparation (14, 22) comprend une couche de substrat en fibre de verre (26), une couche de film mince de PTFE (28) étant disposée sur chaque côté du substrat en fibre de verre, la feuille de séparation (14, 22) ayant une rigidité suffisante pour permettre de retirer des produits alimentaires de la feuille de séparation (14, 22) avec une spatule quand la feuille de séparation est disposée par-dessus la plaque destinée à porter des aliments (12), la feuille de séparation en contact avec la plaque ayant un coefficient de transfert thermique total, de la surface de la plaque destinée à porter des aliments à la surface de la feuille de séparation destinée à se trouver en contact avec les aliments, d'au moins environ 1 192 W/K-m²(210 BTU/h-pied carré-°F) à une température de cuisson d'environ 177 °C (350 °F) à environ 232 °C (450 °F), dans le cas où le produit alimentaire reposant sur la surface destinée à se trouver en contact avec les aliments est un bifteck haché pour hamburger.

2. Dispositif de cuisson (16) selon la revendication 1, comprenant en outre c) un fluide améliorant l'adhérence (18) entre la plaque et la feuille de séparation.

3. Dispositif de cuisson (16) selon la revendication 1 ou 2, dans lequel :
ledit fluide améliorant l'adhérence (18) est sélectionné dans le groupe constitué d'huiles, de graisses, de lubrifiants et de mélanges de ceux-ci ; et/ou
ladite au moins une feuille de séparation (14, 22) recouvre sensiblement la surface supérieure de la plaque destinée à porter des aliments (12) ; et/ou
la feuille de séparation (14, 22) est au moins sensiblement imperméable aux liquides ; et/ou
la feuille de séparation (14, 22) a une épaisseur d'environ 2,54 x 10⁻⁵ m (0,001 pouce) à environ 7,62 x 10⁻⁵ m (0,003 pouce) ; et/ou
la feuille de séparation (14, 22) a une épaisseur d'environ 5,08 x 10⁻⁵ m (0,002 pouce).

4. Dispositif de cuisson (16) selon l'une quelconque des revendications 1 à 3, dans lequel le coefficient de transfert thermique total est supérieur à environ 1 420 W/K-m²(250 BTU/h-pied carré-°F), optionnellement dans lequel le coefficient de transfert thermique total est supérieur à environ 1 703 W/K-m²(300 BTU/h-pied carré-°F).

5. Dispositif de cuisson (16) selon l'une quelconque des revendications 1 à 4, dans lequel le substrat en fibre de verre (26) se compose d'une maille tissée de fibres délimitant une pluralité d'espaces vides entre les fibres, optionnellement dans lequel la maille tissée se compose d'une pluralité de fibres parallèles plus larges (29) ayant approximativement la même largeur supérieure, orientées à angles droits par rapport à une pluralité de fibres parallèles plus étroites (30) ayant approximativement la même largeur inférieure, et optionnellement dans lequel la maille tissée comprend environ 7 fibres par 1/8 de pouce dans chacune de deux directions perpendiculaires.

6. Dispositif de cuisson (16) selon l'une quelconque des revendications 1 à 5, dans lequel la feuille de séparation flexible, anti-adhésive (14, 22) comprend seulement 3 couches, constituées de la couche de film mince de PTFE (28) disposée sur chaque côté du substrat en fibre de verre (26).

7. Procédé de cuisson, comprenant : la fourniture d'au moins une plaque chauffée destinée à porter des aliments (12) ; le fait de placer de façon amovible au moins une feuille de séparation flexible, anti-adhésive (14, 22) sur le dessus de la plaque chauffée destinée à porter des aliments (12), **caractérisé en ce que** la feuille de séparation est constituée d'une couche de substrat en fibre de verre (26), une couche de film mince de PTFE (28) étant disposée sur chaque côté du substrat en fibre de verre (26), la feuille de séparation (14, 22) ayant une rigidité suffisante pour permettre de retirer des produits alimentaires de la feuille de séparation avec une spatule quand la feuille de séparation est disposée par-dessus la plaque destinée à porter des aliments (12), et la feuille de séparation (14, 22) en contact avec la plaque (12) ayant un coefficient de transfert thermique total, de la surface de la plaque destinée à porter des aliments à la surface de la feuille de séparation destinée à se trouver en contact avec les aliments, d'au moins environ 1 192 W/K-m²(210 BTU/h-pied carré-°F) à une température de cuisson d'environ 177 °C (350 °F) à environ 232 °C (450 °F), dans le cas où le produit alimentaire reposant sur la surface destinée à se trouver en contact avec les aliments est un bifteck haché pour hamburger ; le fait de placer au moins un produit alimentaire sur la surface supérieure de la feuille de séparation (14, 22) ; et la cuisson d'un produit alimentaire en contact direct avec la feuille de séparation (14, 22).

8. Procédé selon la revendication 7, dans lequel :
ledit fait de placer de façon amovible au moins une feuille de séparation flexible, anti-adhésive (14, 22) sur le dessus de la plaque chauffée destinée à porter des aliments (12) comprend le fait de recouvrir sensiblement la surface supérieure de la plaque (12) avec ladite au moins une feuille de séparation (14, 22) ; le procédé comprenant en outre optionnellement :
le retrait dudit au moins un produit alimentaire de la surface supérieure de la feuille de séparation (14, 22), ledit retrait comprenant optionnellement le retrait du produit alimentaire avec une spatule insérée entre le produit alimentaire et le dessus de la feuille de séparation (14, 22), ou le retrait simultané dudit au moins un produit alimentaire et de la feuille de séparation de la plaque destinée à porter des aliments (12).

9. Procédé de cuisson selon la revendication 7 ou 8, comprenant l'application d'un fluide améliorant l'adhérence (18) sur la surface de la plaque chauffée destinée à porter des aliments (12).

10. Procédé selon la revendication 9, dans lequel ledit fait de placer au moins une feuille de séparation flexible, anti-adhésive (14, 22) sur le dessus de la plaque chauffée destinée à porter des aliments (12) comprend le fait de recouvrir sensiblement la surface supérieure de la plaque (12) avec ladite au moins une feuille de séparation (14, 22).

11. Procédé selon la revendication 9 ou 10, dans lequel ladite application d'un fluide améliorant l'adhérence (18) sur la surface de la plaque chauffée (12) comprend la cuisson d'un produit alimentaire en contact direct avec la plaque chauffée (12) pour produire, à partir du produit alimentaire, un fluide améliorant l'adhérence (18) sélectionné dans le groupe constitué d'huiles, de graisses, de lubrifiants et de mélanges de ceux-ci.

12. Procédé selon la revendication 9 ou 10, dans lequel ladite application d'un fluide améliorant l'adhérence (18) sur la surface de la plaque chauffée (12) comprend l'application d'un fluide améliorant l'adhérence sélectionné dans le groupe constitué d'huiles, de graisses, de lubrifiants et de mélanges de ceux-ci, ladite application d'un fluide améliorant l'adhérence comprenant optionnellement la pulvérisation d'une huile de cuisson sur la surface de la plaque chauffée (12).

13. Procédé selon l'une quelconque des revendications 9 à 12, le procédé comprenant le retrait dudit au moins un produit alimentaire de la surface supérieure de la feuille de séparation (14, 22), ledit retrait comprenant optionnellement le retrait du produit alimentaire avec une spatule insérée entre le produit alimentaire et le dessus de la feuille de séparation (14, 22), ou ledit retrait comprenant le retrait simultané dudit au moins un produit alimentaire et de la feuille de séparation de la plaque destinée à porter des aliments (12).

14. Procédé selon l'une quelconque des revendications 9 à 13, dans lequel ledit au moins un produit alimentaire comprend une pluralité de biftecks hachés pour hamburgers.

15. Procédé selon l'une quelconque des revendications 9 à 14, dans lequel la feuille de séparation (14, 22) est au moins sensiblement imperméable aux liquides.
